# EUROPÄISCHE PATENTANMELDUNG

(11) **EP 2 363 227 A1**
(43) Veröffentlichungstag der Anmeldung: **07.09.2011**
(21) Anmeldenummer: 11001620.1
(22) Anmeldetag: 28.02.2011
(51) Int. Cl.: B23B 31/26, B23B 31/28, B23Q 1/70

(54) **Bearbeitungsmaschine**

(30) Priorität: 02.03.2010 DE 102010009947; 21.05.2010 DE 102010021010
(71) Anmelder: Grob-Werke GmbH & Co. KG, 87712 Mindelheim (DE)
(72) Erfinder: Höbel, Alfred, 87493 Lauben (DE); Grob, Burkhart Dr.h.c., 86825 Bad Wörishofen (DE)
(74) Vertreter: Pfister, Stefan Helmut Ulrich

(57) **Zusammenfassung**

Die Erfindung betrifft eine Bearbeitungsmaschine für das Bearbeiten von Werkstücken. Sie weist ein Bearbeitungswerkzeug (1) auf. Dieses ist in einer Werkzeugaufnahme (2) gehaften. Dazu ist eine Werkzeugspannvorrichtung vorgesehen. Ein Elektromotor, vorzugsweise ein geberloser Permanentmagnet erregter Synchronmotor, dient entweder zum Erzeugen der Spannkraft oder es wirkt mindestens ein von dem Elektromotor angetriebenes Mittel auf eine Federanordnung um das Freigeben des Bearbeitungswerkzeuges (1) aus der Werkzeugspannvorrichtung zu bewirken. Das Werkzeug (1) kann sowohl in der Umfangsrichtung als auch in der Axialrichtung durch einen Antrieb (5) über ein Zugelement (50) in der Werkzeugspindel (6) so festgelegt werden, dass es in Abhängigkeit der Stellung des Zugelementes (50) einer eigenrotativen spanabhebenden Bearbeitung als rotierendes Schneidwerkzeug (z. B. Bohrer oder Fräser) oder einer nicht eigenrotativen, spanabhebenden Bearbeitung als Drehmeisel dient. Die Festlegung des Bearbeitungswerkzeuges (1) kann durch eine entlang einer axialen Wirkrichtung (3) gerichtete Bewegung der Werkzeugaufnahme (2) im Drehlager (20) erfolgen. Das Bearbeitungswerkzeug (1) kann eine Abstützvorrichtung (7) tragen, über welche sich das festgelegte Bearbeitungswerkzeug (1) am Spindelkopf (60) abstützt.

## Beschreibung

Die Erfindung betrifft eine Bearbeitungsmaschine für das Bearbeiten eines oder mehrerer Werkstücke mit einem Bearbeitungswerkzeug, wobei das Bearbeitungswerkzeug in einer Werkzeugaufnahme einer Werkzeugspindel der Bearbeitungsmaschine mittelbar oder unmittelbar durch eine Werkzeugspannvorrichtung gehalten ist und die Werkzeugspannvorrichtung mindestens ein Werkzeugspannelement umfasst, welches mit dem Bearbeitungswerkzeug mittelbar oder unmittelbar zusammenwirkt.

Gattungsgemäße Bearbeitungsmaschinen sind in der Metallverarbeitung, insbesondere in der spanabhebenden Metallverabeitung hinlänglich bekannt. Das Bearbeitungswerkzeug wird dabei von einer Werkzeugspindel gehalten. Üblicherweise dient eine Werkzeugspindel dafür, das Bearbeitungswerkzeug eigenrotativ anzutreiben und dieses an der gewünschten Position des Werkstückes zu positionieren. Daher weist die Werkzeugspindel auch mindestens einen Bewegungsfreiheitsgrad auf. Im Folgenden ist aber der Begriff "Werkzeugspindel" nicht beschränkt auf einen eigenrotativen Antrieb des Bearbeitungswerkzeugs zu verstehen, sondern beschränkt die Anwendung des Bearbeitungswerkzeuges hier in keinster Weise. Vielmehr wird durch die Werkzeugspindel eine ein- oder mehrdimensionale Beweglichkeit des Bearbeitungswerkzeuges zur Verfügung gestellt. Grundsätzlich umfasst die Werkzeugspindel aber auch eine stillstehende Werkzeughalterung.

Die bekannten Bearbeitungsmaschinen stellen in der Regel eine hohe finanzielle Investition dar. Es ist die Aufgabe der folgenden Erfindung die eingangs beschriebenen Bearbeitungsmaschinen effizienter zu gestalten.

Die Erfindung erreicht eine Effizienzsteigerung durch zwei verschiedene Ansätze.

Die erfindungsgemäße Aufgabe wird zunächst durch eine Bearbeitungsmaschine, wie eingangs beschrieben, gelöst, bei welcher ein Elektromotor oder eine Federanordnung für die Erzeugung der Spannkraft vorgesehen ist und der Elektromotor oder die Federanordnung in Wirkverbindung mit dem Werkzeugspannelement steht oder mindestens ein von dem Elektromotor angetriebenes Mittel auf die Federanordnung für das Freigeben des Bearbeitungswerkzeuges aus der Werkzeugspannvorrichtung wirkt.

Bei bekannten Bearbeitungsmaschinen ist es üblich die Werkzeugspannung hydraulisch zu lösen oder aber das Lösen des durch eine Federanordnung gehaltenen Bearbeitungswerkzeug durch einen hydraulisch betriebenen Zylinder oder Ähnlichem zu bewirken. Der Einsatz von Hydraulik hat den Vorteil, dass mit den hydraulischen Bauelementen auf verhältinismäßig kleinem Raum hohe Kräfte erzeugt werden können.

Nachteilig allerdings ist , dass das Verlegen der Hydraulikleitungen, die entsprechend hohem Druck (mehrere hundert Bar) standhalten müssen, zum Einen aufwendig ist und auch entsprechend wartungsanfällig ist. Der Einsatz von Hydraulik ist daher verhältinismäßig kostenintensiv. Der Vorschlag anstelle einer Hydraulikanordnung als Kraftmedium einen Elektromotor einzusetzen, eliminiert die gesamte Hydraulik aus dem Bereich der Werkzeugspindel mit erheblichen Vorteilen bei der Herstellung der Maschine, wie auch bei ihrer Wartung und Instandhaltung. Dabei wird gegebenenfalls auch ausgenutzt, dass durch geschickte Getriebeanordnung ein Elektromotor hohe Kräfte erzeugen kann.

Ein anderer Vorschlag die Effizienz der Bearbeitungsmaschinen zu erhöhen liegt darin, dass vorgeschlagen wird, dass die Werkzeugspindel einen Antrieb aufweist, welcher entlang einer Wirkrichtung über ein Zugelement das Bearbeitungswerkzeug festlegt.

Wie eingangs bereits beschrieben wurde, beschreibt eine Werkzeugspindel oftmals den rotativen Antrieb eines Bearbeitungswerkzeuges, wie z. B. eines Bohrers oder Fräsers. Dadurch ist aber der Begriff "Werkzeugspindel" nicht hierauf isoliert ausgerichtet. Durch die vorgeschlagenen Bearbeitungsmaschine wird der durch die Eigenrotation des Bearbeitungswerkzeuges realisierten spanabhebenden Bearbeitungsweise der Werkzeugspindel ein weiterer Nutzen zugeordnet. Durch die Festlegung des Bearbeitungswerkzeuges an der Spindel, wozu ein Antrieb der Werkzeugspindel dient, der entlang einer Wirkrichtung über ein Zugelement auf das Bearbeitungswerkzeug wirkt, wird das Bearbeitungswerkzeug lagegenau, beziehungsweise lagestabil blockiert und fungiert, wie bei einer Drehbearbeitung, als feststehender, nicht eigenrotativer Drehmeisel, der aber gleichwohl aufgrund der bevorzugt an der Werkzeugspindel realisierten ein- oder mehrachsigen Beweglichkeit im Raum bezüglich des rotativen Werkstückes in gewünschter Weise positionierbar ist.

Durch die Realisierung eines zweiten Bearbeitungstypes in der Bearbeitungsmaschine, neben dem bekannten eigenrotativen Einsatz des Bearbeitungswerkzeuges, ist jetzt auch die Funktion einer Drehmaschine möglich. Hierdurch erfolgt durch den Vorschlag eine erhebliche Effizienzsteigerung.

Günstigerweise ist vorgesehen, dass das Bearbeitungswerkzeug in sämtlichen hier beschriebenen Ausführungsformen axial bezüglich der Längsachse der Werkzeugspindel festlegbar ist. Oftmals ist die Werkzeugspindel rotatorisch aufgebaut und die Längsachse der Werkzeugspindel beschreibt auch gleichzeitig ihre Rotationsachse. Die Bearbeitungsmaschine stellt darauf ab, eine rotativ eingesetzte Werkzeugspindel als Halterung für einen Drehmeisel zu verwenden. Es ist zusätzlich günstigerweise auch vorgesehen das Bearbeitungswerkzeug in Umfangsrichtung bezüglich der Längsachse der Werkzeugspindel festzulegen. Dies wird durch eine entsprechende Drehmomentabstützung, z. B. durch einen in eine Bohrung des Spindelkopfes eintauchenden Stift oder eine ähnliche Anordnung im Dreh- bzw. Wälzlager realisiert.

Vorteilhaft ist, dass in Abhängigkeit von der durch die Maschinensteuerung vorgegebenen und durch den Antrieb bewirkten Stellung des Zugelementes das in der Werkzeugspindel befindliche Bearbeitungswerkzeug einer eigenrotativen spanabhebenden Bearbeitung als rotierendes Schneidwerkzeug (z. B. Bohrer oder Fräser) oder einer nicht eigenrotativen, spanabhebenden Bearbeitung als Drehmeisel dient.

Es ist vorgesehen, dass die Maschinensteuerung in geeigneter Weise auf den Antrieb wirkt und so die Stellung des Zugelementes beeinflusst. Es ist auch vorgesehen, dass das Zugelement in Wirkrichtung versetzt wird um so das Bearbeitungswerkzeug festzulegen. Es ist so der Einsatz der Bearbeitungsmaschine als Drehbank vorgesehen und das Bearbeitungswerkzeug ist in einer nicht eigenrotativen gleichwohl aber spanabhebenden Bearbeitung als Drehmeisel eingesetzt. Es ist daher an der Maschinensteuerung vorgesehen über den Antrieb das Zugelement anders zu positionieren und insbesondere dabei das Bearbeitungswerkzeug nicht festzulegen. So ist eine eigenrotative und dabei spanabhebende Bearbeitung des Bearbeitungswerkzeuges z. B. als Bohrer oder Fräser möglich.

Bevorzugt ist vorgesehen, dass die Werkzeugaufnahme in einem Drehlager um eine Rotations- oder Längsachse drehbar gelagert ist und die Festlegung des Bearbeitungswerkzeuges durch eine bezüglich der Rotations- oder Längsachse axiale Bewegung der Werkzeugaufnahme, insbesondere in dem Drehlager erfolgt.

Das für die Werkzeugaufnahme vorgesehene Drehlager besitzt, in axialer Richtung gesehen, eine gewisse, jedoch geringfügige Elastizität oder ein Spiel. Diese federnde Eigenschaft resultiert aus dem Aufbau des Drehlagers und der Anordnung der Wälzelemente in dem Wälz- oder Drehlager. Die durch den Antrieb in Wirkrichtung eingeprägte Feststellkraft ist dabei größer als die Federkraft des Wälzlagers, die üblicherweise verhältnismäßig gering ist, wodurch das Drehlager festgelegt wird und somit auch keine Drehbewegung des Bearbeitungswerkzeuges mehr um die Rotationsachse erfolgt. Bei diesem Konzept erfolgt das Festlegen des Bearbeitungswerkzeuges mittelbar, weil die Rotationsbewegung des Werkzeugs auf der Werkzeugaufnahme festgelegt wird.

In einem anderen, alternativ, parallel oder in Kombination mit einem oder mehreren Merkmalen beziehungsweise einer oder mehreren Ausführungsformen der Bearbeitungsmaschine realisierbaren Konzept weist das Bearbeitungswerkzeug eine Abstützvorrichtung auf, über welche sich das festgelegte Bearbeitungswerkzeug am Spindelkopf abstützt. Bei diesem Konzept erfolgt nicht zwingenderweise eine axiale Beanspruchung des Drehlagers. Die Abstützvorrichtung ist z. B. gebildet von einem an dem Bearbeitungswerkzeug vorgesehenen Abstützkragen oder einer Abstützplatte, welche Abstützelemente wie z. B. Abstützstifte trägt, über welche sich das Bearbeitungswerkzeug am Spindelkopf, dem vorderen Ende der Werkzeugspindel abzustützen vermag. Daher ist es möglich, dass die Abstützvorrichtung variabel gestaltbar ist, und nicht nur auf die Variante gemäß der beiliegenden Figur reduziert auszubilden ist. Es sind verschiedene Möglichkeiten realisierbar, z. B. eine hervorstehende Feder, die in eine entsprechende Nut eingreift und so sowohl eine Drehmomentabstützung (Festlegung in Umfangsrichtung) wie auch eine axiale Abstützung ergibt.

In einer bevorzugten Ausgestaltung, die selbstverständlich auch im Zusammenhang mit sämtlichen, einzelnen oder mit Kombinationen weiterer Ausführungsformen beziehungsweise deren Merkmalen realisierbar ist, ist vorgesehen, dass als Antrieb ein Elektromotor oder ein Hydraulikantrieb beziehungsweise Hydraulikmotor vorgesehen ist. Die Bearbeitungsmaschine, welche in zwei verschiedenen Bearbeitungsarten einsetzbar ist, erlaubt die alternative oder parallele Verwendung eines Elektromotors und/oder eines Hydraulikantriebes als Antrieb. Da es insbesondere auf eine axiale Rückzugsbewegung des Bearbeitungswerkzeuges relativ zur Werkzeugspindel ankommt, kann eine solche Rückzugsbewegung oder Wirkbewegung z. B. auch durch einen hydraulikbeaufschlagbaren Kolben in einer Anordnung wie in einem Arbeitszylinder realisiert werden. Die Rotationsbewegung des Rotors eines Elektromotors wird dabei bevorzugt durch eine Kugelrollspindel in eine axiale Bewegung umgesetzt.

Eine Effizienzsteigerung der Bearbeitungsmaschine beziehungsweise deren Ausführungsformen und vorteilhaften Weiterbildungen wird vor allem auch dadurch erreicht, dass anstelle aufwändiger Hydraulikkomponenten ein oder mehrere Elektromotor/en als Antrieb/e, insbesondere als mittelbare oder unmittelbare Spann- oder als Drehantrieb/e verwendet wird/werden.

Als günstig wird hierbei angesehen, wenn als Antrieb ein Elektromotor, insbesondere Servomotor Verwendung findet. Dieser Elektromotor beziehungsweise Servomotor kann insbesondere als Synchron-, Asynchron- oder Gleichstrommotor ausgebildet sein. Vorteilhaft bei der Verwendung von Servomotoren ist deren kompakte Bauform, der robuste Aufbau und die Möglichkeit zum Betrieb in einem geschlossenen Regelkreis. Der Betrieb kann dabei momentengeregelt, geschwindigkeitsgeregelt oder positionsgeregelt sein.

Als vorteilhafte Weiterbildung der Bearbeitungsmaschine sowie einer oder mehrerer Ausführungsformen beziehungsweise Kombinationen von Ausführungsformen beziehungsweise Merkmalen der Ausführungsformen wird angesehen, wenn der Antrieb über einen geberlosen Synchron- oder Asynchronmotor erfolgt. Insbesondere ein permanentmagneterregter Synchronmotor (PMSM) ist hierbei bevorzugt. Dabei ist von dem Vorschlag gleichermaßen die Anordnung des/der Permanentmagnete/n als vergrabene/r Magnet/e oder als Oberflächenmagnet/e am Rotor umfasst, wobei die Verwendung vergrabener Magnete/n im Rotor als besonders vorteilhaft angesehen wird, da mechanische Belastungen im Rotorblechpaket auftreten und nicht an der Oberfläche. Zudem sind geringere Verluste im Permanentmagneten zu verzeichnen.

Der Einsatz von Permanentmagneten auf oder in dem Rotor erspart die bei Synchronmaschinen sonst vorhandene Erregerwicklung.

Als Vorteil der Verwendung geberloser Motoren, insbesondere von Synchronmotoren wird angesehen, dass hier auf die zusätzliche Anordnung von Gebern oder Sensoren für die Rotorlagebestimmung verzichtet werden kann und sich die Baumaße entsprechend verringern. In den erfindungsgemäßen Bearbeitungsmaschinen beziehungsweise den hierin vorgesehenen Werkzeug- beziehungsweise Werkstückspann- beziehungsweise -drehvorrichtungen ist der Bauraum für die einzelnen Komponenten knapp bemessen, um eine möglichst kompakte Bauart des gesamten Bearbeitungszentrums realisieren zu können. Neben der Steigerung des Wirkungsgrades der Dynamik herkömmlicher Bearbeitungsmaschinen kann durch die Verwendung von geberlosen Motoren der Bauraum beziehungsweise können die Bauraumanforderungen seitens des Antriebes optimiert werden.

Als günstig wird angesehen, eine geberlose Rotorlagebestimmung, insbesondere eine geberlose Stillstandslageerkennung vorzusehen, die sich insbesondere über den geberlosen Synchronmotor realisieren lässt. So kann in einem geberlosen Synchronmotor beispielsweise die Position des Rotors mit Hilfe einer Anisothropie der resultierenden Induktivität in den verwendeten Statorspulen des Stators geschätzt werden. Beim Betrieb des Synchronmotors können abhängig von der Rotorlage in den Statorspulen verschiedenen resultierende Induktivitäten gemessen werden, über die sich die Position des Rotors abschätzen lässt. Als vorteilhaft wird in diesem Zusammenhang angesehen, wenn die Rotorlagebestimmung beziehungsweise die Stillstandslageerkennung software- oder NC-gesteuert durchführbar ist. Eine entsprechende Integration in die Maschinensteuerung, zum Beispiel eine Mikrocontroller umfassende Maschinensteuerung kann auf einfache Art und Weise realisiert werden.

Eine Möglichkeit zur Bestimmung der Rotorlage beziehungsweise der Stillstandslage sieht beispielsweise vor, dass dem Ansteuersignal zum Anlegen der Statorströme für die Statorspulen Messsignale so überlagert werden, dass zusätzlich zum Antriebsmagnetfeld ein Wechselmagnetfeld erzeugt wird, wobei die durch die Mehrsignale hervorgerufenen Stromflüsse durch die Statorspulen von der rotorlageabhängigen resultierenden Induktivität des Synchronmotors abhängt. Die resultierende Induktivität des Synchronmotors hängt von der Position des Rotors ab. Dabei basiert das Verfahren zur geberlosen Rotorlagebestimmung auf der Detektion der magnetischen Anisotopie von Längs- und Querinduktivität des Motors. Wird eine sich schnell ändernde Spannung an den Motor angelegt, so fällt die Spannung im Ständerstrang fast ausschließlich an der Rotorlageabhängigen Induktivität ab. Der erregte Strom wird somit durch die Rotorlage moduliert und kann dementsprechend ausgewertet werden. Die Signalstärke ist proportional zur Differenz von Längs- und Querinduktivität.

Die Eingangs- und Ausgangssignale werden von einer Steuerbeziehungsweise Messsoftware beziehungsweise der NC-Steuerung verarbeitet, um hierüber die Rotorlage beziehungsweise die Stillstandslage zu definieren. Diese definiert wiederum die Werkzeug-Einsatzposition beziehungsweise die Werkstück-Bearbeitungsposition beziehungsweise die Position des durch einen solchen Elektromotor angetriebenen Spannelements oder Spannvorrichtung für das Werkstück. Gegebenenfalls ist in der Maschinensteuerung für die Auswertung der Rotorlage ein separater Schaltkreis beziehungsweise ein hierfür programmierter Mikrocontroller vorgesehen.

Die Verwendung von Synchronmotoren hat neben der Reduzierung des für den Antrieb notwendigen Bauraumes weitere Vorteile. So werden die Installationskosten insgesamt reduziert, da Geberleitung, Geber und Geberschnittstelle wegfallen. Die Synchronmotoren ermöglichen eine hohe Dynamik und eine schlupffreie Bewegung. Neben dem reduzierten Platzbedarf weisen diese auch noch ein geringes Gewicht, dabei jedoch einen hohen Wirkungsgrad und eine hohe Verfügbarkeit auf. Die Lagebestimmung kann auf einfache Art und Weise in die Maschinensteuerung der Bearbeitungsmaschine integriert werden, eine Um- oder Nachrüstbarkeit bestehender Maschinen ist gegeben.

Ein weiterer erheblicher Vorteil des Einsatzes eines Elektromotores gegenüber der Verwendung von anderen Antriebstypen wie z. B. eines Hydraulikantriebs, liegt zum Einen darin, dass die Leistungsüberwachung des Elektromotores durch eine entsprechende Stromüberwachung relativ einfach realisierbar ist. Auch ist ein Elektromotor bezüglich seiner Stellung des Rotors sehr viel genauer überwachbar als ein Hydraulikantrieb und es ist daher möglich, durch ein entsprechend intelligent gesteuertes Verfahren des als Elektromotor ausgestatteten Antriebes die Wechselzeiten bei einem Werkzeugwechsel zu reduzieren, da durch die Stellung des von dem Antrieb angetriebenen Elementes z. B. des Spannelemente, der Zustand des Werkzeuges genau definiert ist, also z. B. festgespannt, gehalten, aber noch nicht gespannt beziehungsweise gerade entspannt oder freigegeben, um das Werkzeug zu wechseln. Hierin liegen erhebliche Vorteile des Einsatzes eines Elektromotors gegenüber den aus dem Stand der Technik, bekannten Hydraulikantrieben für diesen Zweck.

Die zuvor beschriebenen Ausführungsformen bilden alleine, in Kombination und/oder in Kombination einer oder mehrerer Merkmale der Ausführungsformen den Gegenstand weiter und dienen zur Lösung der eingangs gestellten Aufgabe.

In der Zeichnung ist die Erfindung insbesondere in einem Ausführungsbeispiel schematisch dargestellt. Es zeigen:
- Fig. 1, 2a, 3: jeweils in einer Seitenansicht die Werkzeugspindel einer erfindungsgemäßen Bearbeitungsmaschine.
- Fig. 2b: in einer Draufsicht die Stirnseite der Werkzeugspindel der erfindungsgemäßen Bearbeitunsmaschine nach Fig. 2a.

In den Figuren sind gleiche oder einander entsprechende Elemente jeweils mit den gleichen Bezugszeichen bezeichnet und werden daher, sofern nicht zweckmäßig, nicht erneut beschrieben.

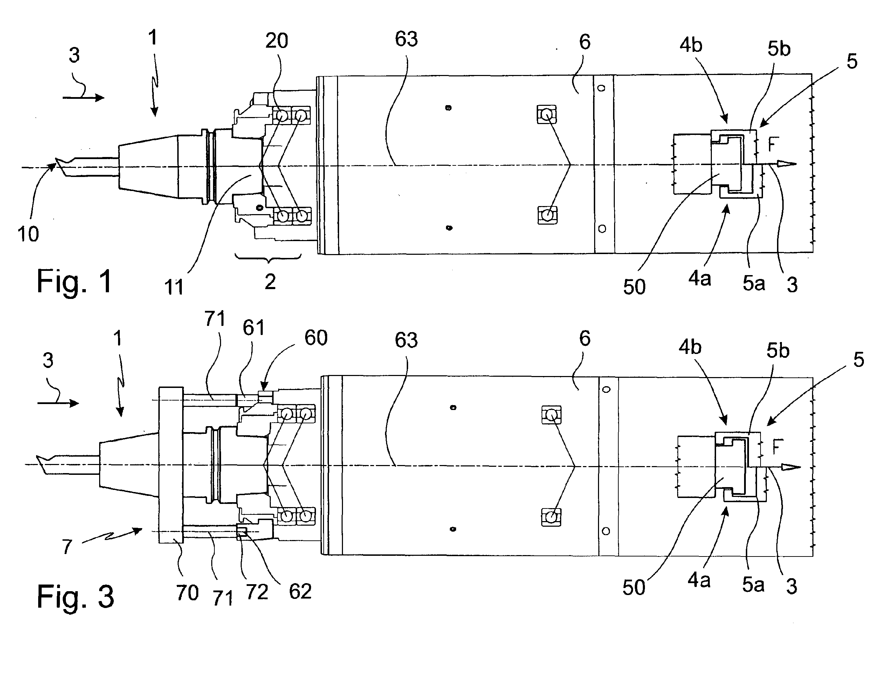

In Fig. 1, 2a und 3 sind im rechten Bereich in der jeweiligen Darstellung jeweils zwei verschiedene Stellungen angedeutet und mit den Buchstaben a und b gekennzeichnet. Eine Ausgestaltung der Bearbeitungsmaschine zielt darauf ab mit der hier dargestellten Bearbeitungsmaschine zwei Einsatzbereiche oder Einsatzmodi zu realisieren. Hierfür ist in der Werkzeugspindel 6 insbesondere auf der dem Bearbeitungswerkzeug 1 abgewandten Seite (in Fig. 1, 2a, 3 auf der rechten Seite gezeigt) ein separater Antrieb vorgesehen, dessen Stellelement das Bezugszeichen 5 trägt, das synonym auch für den Antrieb verwendet wird. Die Fig. zeigt schematisch die beiden verschiedenen Stellungen des Stellelementes 5. In der oberen Hälfte (bezüglich der Mittelachse 63) ist die Normalstellung 4b gezeigt, in der unteren Hälfte ist die festgelegte Stellung 4a des Bearbeitungswerkzeuges 1 gezeigt. Der Antrieb 5 beziehungsweise dessen Stellelement 5 ist ebenfalls in zwei verschiedenen Stellungen 5a, 5b dargestellt. In der Stellung 4a hintergreift das im Schnitt c-förmig ausgebildete Stellelement 5a das an seinem Ende hammerkopfartig ausgebildetes Zugelement 50. Das Zugelement 50 ist mit nicht weiter dargestellten Einbauteilen verbunden, die letztlich ein Spannelement der Spannvorrichtung betätigen und so das Bearbeitungswerkzeug 1 in der Werkzeugaufnahme 2 festhalten. Die Rückzugsbewegung des Zugelementes 50 nach rechts ist mit der Wirkrichtung 3 gekennzeichnet. Die Wirkrichtung 3 bewirkt letztendlich auch ein Hineinziehen des Bearbeitungswerkzeuges 1 in den vorderen Bereich der Spindel 6 bzw. nach rechts. Der in der Abbildung schematisch dargestellte und mit dem Bezugszeichen 5 bezeichnete Antrieb kann verschiedene Ausführungsformen aufweisen. So kann der Antrieb 5 als Elektromotor oder Hydraulikmotor beziehungsweise -antrieb ausgeführt werden. Der Elektromotor selbst kann in Ausführungen als Synchron-, Asynchron- oder Gleichstrommotor verbaut werden, wobei die Verwendung eines geberlosen Synchron- oder Asynchronmotors entscheidende Vorteile hinsichtlich der Rotorlage- beziehungsweise Stillstandslageerkennung sowie bezüglich der Baumaße mit sich bringt.

In den in Fig. 1 gezeigten Ausführungsbeispielen wird durch die Bewegung des Antriebes 5 das Bearbeitungswerkzeug 1 so zurückgesetzt, dass dessen Werkzeugaufnahme 2 eine axiale Kraft auf das Drehlager beziehungsweise Wälzlager 20 ausübt. Der Werkzeugfuß 11 ist dabei in der Werkzeugaufnahme 2 eingesteckt, die Elemente der Spannvorrichtung sind nur schematisch dargestellt, die Werkzeugaufnahme 2 ist um die Rotations-/Längsachse 63 in dem Wälz- bzw. Drehlager 20 drehbar gelagert. Durch die von dem Antrieb 5 resultierenden Kraft F in Wirkrichtung 3 nach rechts versetzt, bildet sich eine entsprechende axiale Kraft in dem Drehlager 20 aus, die dazu führt, dass das Drehspiel kompensiert und so das Drehlager 20 beziehungsweise die Drehbewegung festgelegt wird. Ist aber die Drehbewegung des Drehlagers 20 aufgehoben, so vermag auch das Bearbeitungswerkzeug 1 sich nicht mehr zu drehen und ist somit auch festgelegt.

In dem in Fig. 1 gezeigten Beispiel wird das Bearbeitungswerkzeug 1 mittelbar über die Festlegung des Drehlagers 20 festgelegt.

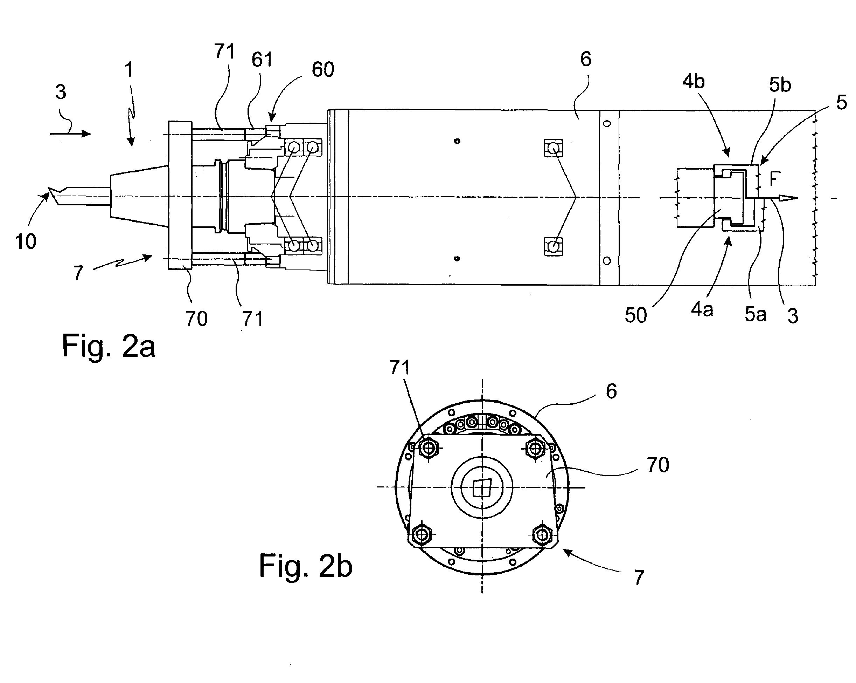

Fig. 2a, 2b beziehungsweise Fig. 3 zeigen dagegen noch eine Variante bei welcher das Bearbeitungswerkzeug 1 selbst, also direkt beziehungsweise unmittelbar durch die Stellung des Zugelementes 50, bedingt durch den Antrieb 5 festgelegt ist.

Das Bearbeitungswerkzeug 1 trägt dabei eine Abstützvorrichtung 7, die gebildet ist durch eine auf dem Bearbeitunsgwerkzeug aufgeschobene Abstützplatte oder einen Abstützkragen 70. Diese Abstützplatte 70 weist eine größere Dimension als der Durchmesser des Werkzeugschaftes des Bearbeitungswerkzeuges 1 auf. Auf der der Werkzeugspitze 10 abgewandten Seite der Abstützplatte 70 weist die Abstützvorrichtung 7 mehrere Abstützelemente 71, z. B. Abstüztstifte 71 auf, die sich neben der Werkzeugaufnahme 2 am Spindelkopf 60 auf einem Abstüztbereich 61 oder Abstützring 61 in axialer Richtung abstützen.

Eine Festlegung des Bearbeitungswerkzeuges 1 in Umfangsrichtung (bezogen auf die Rotationsachse 63) erfolgt hier über die Reibung der Abstützelemente 71 auf dem Abstützbereich 61. Um eine bessere Drehmomentabstüzung zu erreichen, wird in Fig. 3 erfindungsgemäß eine Verbesserung vorgeschlagen. An dem unteren Abstützstift 71 ist eine Drehmomentabstützung 72 realisiert. Diese ist durch ein formschlüssiges Eintauchen des von der Abstützplatte 70 abgewandten Ende des Abstützstiftes 71 in eine Bohrung 62 des Abstützbereiches 61 gebildet.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich,schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungsmaschine für das Bearbeiten eines oder mehrerer Werkstücke mit einem Bearbeitungswerkzeug , wobei das Bearbeitungswerkzeug in einer Werkzeugaufnahme einer Werkzeugspindel der Bearbeitungsmaschine mittelbar oder unmittelbar durch eine Werkzeugspannvorrichtung gehalten ist und die Werkzeugspannvorrichtung mindestens ein Werkzeugspannelement umfasst, welches mit dem Bearbeitungswerkzeug mittelbar oder unmittelbar zusammenwirkt, **dadurch gekennzeichnet, dass** ein Elektromotor oder eine Federanordnung für die Erzeugung der Spannkraft vorgesehen ist, und der Elektromotor oder die Federanordnung in Wirkverbindung mit dem Werkzeugspannelement steht oder mindestens ein von dem Elektromotor angetriebenes Mittel auf die Federanordnung für das Freigeben des Bearbeitungswerkzeuges (1) aus der Werkzeugspannvorrichtung wirkt.

2. Bearbeitungsmaschine für das Bearbeiten eines oder mehrerer Werkstücke, insbesondere nach Anspruch 1, mit einem Bearbeitungswerkzeug, wobei das Bearbeitungswerkzeug in einer Werkzeugaufnahme einer Werkzeugspindel der Bearbeitungsmaschine mittelbar oder unmittelbar durch eine Werkzeugspannvorrichtung gehalten ist und die Werkzeugspannvorrichtung mindestens ein Werkzeugspannelement umfasst, welches mit dem Bearbeitungswerkzeug mittelbar oder unmittelbar zusammenwirkt, **dadurch gekennzeichnet, dass** die Werkzeugspindel (6) einen Antrieb (5) aufweist, welcher entlang einer Wirkrichtung (3) über ein Zugelement (50) das Bearbeitungswerkzeug (1) festlegt.

3. Bearbeitungsmaschine nach Anspruch 1 oder 2, **dadurch gekennzeichnet, dass** das Bearbeitungswerkzeug (1) axial bezüglich der Längsachse (63) der Werkzeugspindel (6) festlegbar ist.

4. Bearbeitungsmaschine nach einem oder mehreren der vorhergehenden Ansprüche, **dadurch gekennzeichnet, dass** das Bearbeitungswerkzeug (1) in Umfangsrichtung bezüglich der Längsachse (63) der Werkzeugspindel (6) festlegbar ist.

5. Bearbeitungsmaschine nach einem oder mehreren der vorhergehenden Ansprüche, **dadurch gekennzeichnet, dass** in Abhängigkeit der durch die Maschinensteuerung vorgegebenen und durch den Antrieb (5) bewirkten Stellung des Zugelementes das in der Werkzeugspindel (6) befindliche Bearbeitungswerkzeug (1) einer eigenrotativen spanabhebenden Bearbeitung als rotierendes Schneidwerkzeug (z. B. Bohrer oder Fräser) oder einer nicht eigenrotativen, spanabhebenden Bearbeitung als Drehmeisel dient.

6. Bearbeitungsmaschine nach einem oder mehreren der vorhergehenden Ansprüche, **dadurch gekennzeichnet, dass** die Werkzeugaufnahme (2) in einem Drehlager (20) um eine Rotations- oder Längsachse (63) drehbar gelagert ist und die Festlegung des Bearbeitungswerkzeuges (1) durch eine, bezüglich der Rotations- oder Längsachse (63) axiale Bewegung der Werkzeugaufnahme (2) insbesondere in dem Drehlager (20) erfolgt.

7. Bearbeitungsmaschine nach einem oder mehreren der vorhergehenden Ansprüche, **dadurch gekennzeichnet, dass** als Antrieb (5) ein Elektromotor (5) oder ein Hydraulikantrieb bzw. Hydraulikmotor vorgesehen ist.

8. Bearbeitungsmaschine nach einem oder mehreren der vorhergehenden Ansprüche, **dadurch gekennzeichnet, dass** als Antrieb (5) ein Elektromotor beziehungsweise Servomotor, insbesondere ein Synchron-, Asynchron- oder Gleichstrommotor vorgesehen ist.

9. Bearbeitungsmaschine nach einem oder mehreren der vorhergehenden Ansprüche, **dadurch gekennzeichnet, dass** der Elektromotor als geberloser Synchron- oder Asynchronmotor ausgebildet ist.

10. Bearbeitungsmaschine nach einem oder mehreren der vorhergehenden Ansprüche, **dadurch gekennzeichnet, dass** der Synchronmotor als Permanentmagnet erregter Synchronmotor (PMSM) ausgebildet ist.

11. Bearbeitungsmaschine nach einem oder mehreren der vorhergehenden Ansprüche, **dadurch gekennzeichnet, dass** in dem Synchronmotor eine geberlose Rotorlagebestimmung, insbesondere eine geberlose Stillstandslageerkennung vorgesehen ist.

12. Bearbeitungsmaschine nach einem oder mehreren der vorhergehenden Ansprüche, **dadurch gekennzeichnet, dass** die Rotorlagebestimmung software- oder NC-gesteuert durchführbar ist.

13. Bearbeitungsmaschine nach einem oder mehreren der vorhergehenden Ansprüche, **dadurch gekennzeichnet, dass** der Antrieb (5) in einer, nicht der Wirkrichtung (3) entsprechenden, bevorzugt dieser entgegengesetzten Freigaberichtung zur Freigabe des Bearbeitungswerkzeuges (1) aus der Werkzeugspannvorrichtung dient.

14. Bearbeitungsmaschine nach einem oder mehreren der vorhergehenden Ansprüche, **dadurch gekennzeichnet, dass** das Bearbeitungswerkzeug (1) eine Abstützvorrichtung (7) trägt, über welche sich das festgelegte Bearbeitungswerkzeug (1) am Spindelkopf (60) abstützt.

15. Bearbeitungsmaschine nach einem oder mehreren der vorhergehenden Ansprüche, **gekennzeichnet durch** eine von der Werkzeugspitze (10) zu dem, in der Werkzeugaufnahme (2) gehaltenen, Werkzeugfuß (11) orientierten Wirkrichtung (3).
